# EUROPÄISCHE PATENTSCHRIFT

(11) **EP 2 042 830 B1**
(45) Veröffentlichungstag und Bekanntmachung des Hinweises auf die Patenterteilung: **13.01.2016**
(21) Anmeldenummer: 08165209.1
(22) Anmeldetag: 26.09.2008
(51) Int. Cl.: G01B 21/16, G01S 13/08

(54) **Vorrichtung und Verfahren zur Radialspaltmessung mit Millimeterwellen**
Device and method for measuring radial air gap with millimeter waves
Dispositif et procédé de mesure radiale d'entrefer à l'aide d'ondes millimétriques

(30) Priorität: 28.09.2007 DE 102007046441
(43) Veröffentlichungstag der Anmeldung: 01.04.2009
(73) Patentinhaber: Siemens Aktiengesellschaft, 80333 München (DE)
(72) Erfinder: Bosselmann, Thomas Dr., 91080 Marloffstein (DE); Huber, Klaus Dr., 9190 Effeltrich (DE); Schicht, Andreas, 91058 Erlangen (DE); Schmidt, Lorenz-Peter Prof., 91093 Hessdorf (DE); Weinzierl, Jochen Dr., 90449 Nürnberg (DE); Willsch, Michael Dr., 07745 Jena (DE)

(56) Entgegenhaltungen:
- EP-A- 0 806 680
- GB-A- 2 382 708
- WILLSCH M ET AL: "New approaches for the monitoring of gas turbine blades and vanes" SENSORS, 2004. PROCEEDINGS OF IEEE VIENNA, AUSTRIA OCT. 24 - 27, 2004, PISCATAWAY, NJ, USA,IEEE, 24. Oktober 2004 (2004-10-24), Seiten 20-23, XP010793323 ISBN: 978-0-7803-8692-1

## Beschreibung

Ein sicherer und effizienter Betrieb von Gas- und Dampfturbinen (GuD-Turbinen) hängt in hohem Maße davon ab, wie groß der Abstand zwischen der radial äußeren Kante der Turbinenschaufeln und der inneren Oberfläche des Turbinengehäuses ist. Ein Sicherheitsabstand sollte nicht unterschritten werden, um Beschädigungen der Schaufeln und/oder des Gehäuses zu vermeiden. Ein zu großer Abstand wirkt sich dagegen negativ auf den Wirkungsgrad der Turbine aus. Es ist daher notwendig, den Radialspalt zwischen Schaufel und Gehäuse zu überwachen. Da der Radialspalt direkt von dynamischen Zustandsgrößen (bspw. Temperatur und Drehgeschwindigkeit des Rotors) abhängt, die sich während des Betriebes ständig ändern können, ist eine kontinuierliche Überwachung des Spalts erforderlich.

Für diese Überwachungsaufgabe kommen gegenwärtig zumeist kapazitive Sensoren zum Einsatz. Deren Ausgangssignal liefert jedoch lediglich einen integralen bzw. mittleren Messwert für den Abstand einer Schaufel zum Sensor bzw. zur Gehäusewand ohne nennenswerte laterale Auflösung, d.h. Auflösung in Drehrichtung der Turbinenschaufel. Für Schaufeln mit unregelmäßigen Kantenstrukturen z.B. aufgrund von Lüftungslöchern, Dichtungslippen und/oder Profilierungen an der gehäuseseitigen Kante können diese Kantenstrukturen mit Hilfe eines integralen Messwerts mangels lateralem Auflösungsvermögen nicht detektiert werden. Eine Berücksichtigung individueller Geometrien der Schaufelkanten ist demnach nicht möglich. Lokale Überhöhungen in der Struktur einer Schaufelkante werden nicht erkannt und können zu einer Beschädigung der Turbine führen. Des Weiteren ist es schwierig, zwischen einer tatsächlichen Änderung des Radialspalts und einer Geometrieänderung in der Turbine bspw. durch eine axiale Verschiebung des Rotors zu unterscheiden. Letzteres spielt insbesondere dann eine Rolle, wenn das Turbinengehäuse bspw. konisch geformt ist. Die Folge derartiger Unsicherheiten ist, dass ein vergleichsweise großer Sicherheitsabstand auf Kosten des Wirkungsgrades eingehalten werden muss. Gleiches gilt für alternative Verfahren zur Überwachung des Radialspalts mit Mikrowellen mit Wellenlängen im cm-Bereich, da auch diese nur integrale Messwerte liefern.

Dieses Problem wird in US 6 856 281 B2 durch Anwendung einer "error map" gelöst. Allerdings sind hierbei für jeden Schaufeltyp aufwändige Referenzmessungen im Labor notwendig. Zudem können nicht vorhersehbare Veränderungen der axialen Position der Turbinenschaufeln - bspw. durch Verschiebung des Rotors - und / oder Veränderungen der Struktur der Schaufelkante wie etwa durch Erosion zur Verfälschung der Messergebnisse führen. Das Dokument EP 0 806 680 A offenbart ein Verfahren zur Radialspaltmessung für eine Turbine.

Ein hohes laterales Auflösungsvermögen ist dagegen durch optische Verfahren erreichbar. Zum einen können jedoch die notwendigen Sichtfenster leicht verschmutzen. Zum Anderen bieten optische Sensoren nur eine begrenzte thermische Belastbarkeit.

Aufgabe der Erfindung ist daher die Schaffung eines Verfahrens zur Überwachung des Radialspalts zwischen einer Turbinenwand und einer Turbinenschaufel mit dem Ziel eines sicheren und effizienten Betriebs der Turbine.

Diese Aufgabe wird durch das erfindungsgemässe Verfahren mit den in Patentanspruch 1 angegebenen Merkmalen gelöst. Vorteilhafte Ausgestaltungen und Weiterbildungen des Verfahrens ergeben sich aus den abhängigen Ansprüchen.

Zur Abstandsmessung werden durch eine Sende-Empfangseinheit Millimeterwellen mit einer Wellenlänge λ ausgesendet, die an einer Schaufelkante reflektiert werden. Die reflektierten Wellen werden daraufhin in der Sende-Empfangseinheit detektiert. Zur Bestimmung des Abstands zwischen der Sende-Empfangseinheit und der Schaufelkante wird ausgenutzt, dass die Phase (p = 2π · (2d) / λ der empfangenen Welle direkt vom Abstand d der reflektierenden Schaufelkante zur Sende-Empfangseinheit abhängt. Die Messgröße der Abstandsmessung, aus der die Phase und schließlich der Abstand abgeleitet werden kann, ist ein Reflexionsfaktor r = R · exp (i · ϕ), der von der Phase (p und von einem Betragswert R anhängt und in Abhängigkeit von der Zeit gemessen wird.

Verfahren zur Messung des Reflexionsfaktors sind an sich bekannt. Bspw. lässt sich der Reflexionsfaktor r über eine Messung von zeitabhängigen, sog. Inphase- I(t) und Quadratur-Komponenten Q(t) des empfangenen Signals bestimmen, wobei gilt I = R · sin (ϕ) und Q = R · cos (ϕ).

Voraussetzung für eine hohe laterale Auflösung der Strukturen der Schaufelkanten bzw. zur Unterscheidung verschiedener Schaufelgeometrien ist die Auswahl einer geeigneten Wellenlänge. Da die mögliche Auflösung in der Größenordnung der Wellenlänge selbst liegt, werden in der vorliegenden Erfindung Millimeterwellen benutzt.

Im Gegensatz zu den aus dem Stand der Technik bekannten Verfahren können mit der erfindungsgemäßen Millimeterwellen-Sensorik unterschiedliche Schaufelgeometrien ortsaufgelöst ausgemessen werden, so dass auch Geometrieänderungen bspw. durch axiale Verschiebung des Rotors erkannt werden können. Man erhält nicht nur einen integralen Abstandswert über eine Schaufelkante, sondern für jede Schaufel ein komplettes Abstandsprofil. Aufwändige und anfällige Fehlerkorrekturen, wie sie bei den integralen Verfahren zwingend notwendig sind, können entfallen: Weder muss das Schaufelprofil vorher bekannt sein, noch sind Referenzmessungen im Labor notwendig.

Zusätzlich wird durch eine Fokussierung der Wellen in Bewegungsrichtung der Schaufelkante eine höhere Genauigkeit erzielt. Die Fokussierung ist auf zwei unterschiedlichen Wegen zu erreichen:
- Bündelung der ausgesandten Signalenergie auf einen möglichst kleinen Punkt, entweder durch Verwendung einer großen Antennenapertur oder durch eine Linse im Strahlengang: Da eine der benötigten Auflösung entsprechend große Apertur aus Platzgründen nicht möglich ist, werden hitzefeste, z.B. keramische Linsen verwendet.
- Nachträgliche, virtuelle Fokussierung durch Signalverarbeitung: Aus den Messdaten von Abstandsmessungen wird mit Hilfe eines an sich bekannten SAR-Verfahrens (Synthetic Aperture Radar) oder anhand eines ebenfalls bekannten Entfaltungsalgorithmus (bspw. Tikhonov Regularisierung, Wiener Filter, iterative Verfahren) eine nachträgliche Fokussierung durch rechnerische Nachverarbeitung der empfangenen Signale erreicht. Die Antennenapertur wird beim SAR-Verfahren unter Ausnutzung einer Bewegung der Antenne relativ zu dem auszumessenden Objekt künstlich vergrößert, indem die über eine gewisse Strecke empfangenen und gespeicherten Radardaten einer geeigneten Nachverarbeitung unterzogen werden. Über die synthetische, größere Apertur wird eine höhere räumliche Auflösung ermöglicht. Vorteilhaft ist hierbei, dass die Lage der Fokusebene frei wählbar ist und adaptiv an das Messergebnis angepasst werden kann.

Grundvoraussetzung für die Anwendbarkeit eines solchen numerischen Verfahrens ist, dass die Position der Antenne relativ zum zu beobachtenden Objekt jederzeit genau bekannt ist. Übliche SAR-Verfahren bspw. zur Abbildung der Erdoberfläche aus der Luft arbeiten mit einer bewegten Antenne zur Aufspannung der synthetischen Apertur, während das auszumessende Objekt ortsfest ist. Aus Symmetriegründen ist es jedoch gleichwertig, eine ortsfeste Antenne zu verwenden, während sich das auszumessende Objekt auf einer vorgegebenen, bekannten Bahn an der Antenne vorbei bewegt. Letzteres kommt in der vorliegenden Erfindung zur Anwendung.

Weitere Vorteile, Merkmale und Einzelheiten der Erfindung ergeben sich aus den im Folgenden beschriebenen Ausführungsbeispielen sowie anhand der Zeichnung.

Dabei zeigt:
- Figur 1a: eine Vorrichtung zur Radialspaltmessung gemäß dem Stand der Technik,
- Figur 1b: simuliertes Profil einer gemäß dem Stand der Technik vermessenen Schaufelkante,
- Figur 2a: ein erstes erfindungsgemäßes Ausführungsbeispiel einer Vorrichtung zur Radialspaltmessung mit nachträglicher Fokussierung,
- Figur 2b: simuliertes Profil einer gemäß dem ersten Ausführungsbeispiel vermessenen Schaufelkante,
- Figur 3a: ein zweites Ausführungsbeispiel einer Vorrichtung zur Radialspaltmessung mit Fokussierlinse,
- Figur 3b: simuliertes Profil einer gemäß dem zweiten Ausführungsbeispiel vermessenen Schaufelkante,
- Figur 4: systematisch die Rückstreuung einer als Punktreflektor dargestellten Turbinenschaufel während des Durchlaufens einer Strahlkeule,
- Figur 5a: den Verlauf des Realteils eines simulierten, ortsabhängigen Reflexionsfaktors,

Figur 5b das Ergebnis einer SAR-Rekonstruktion.

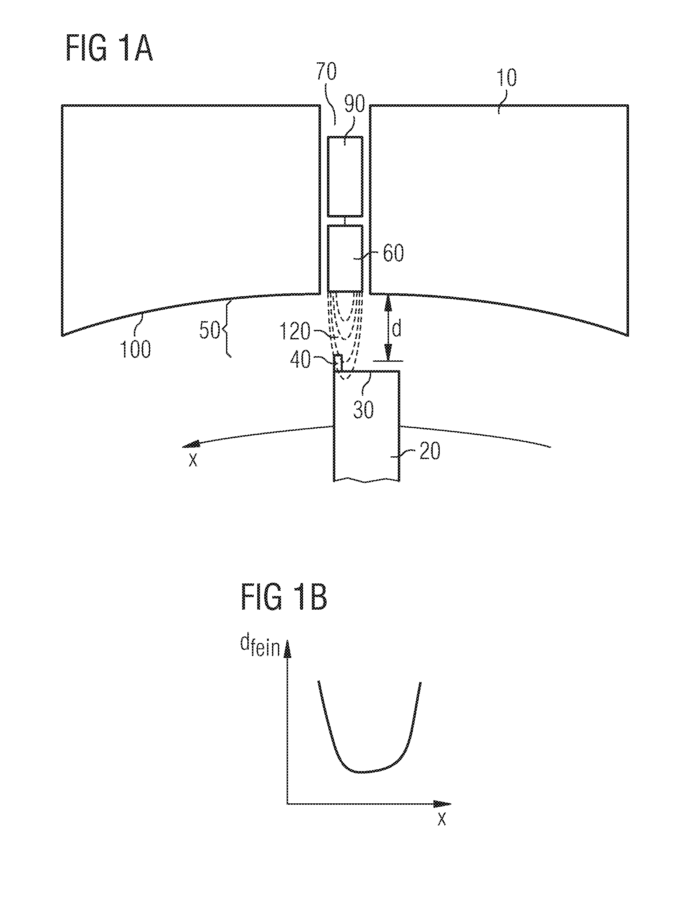

Eine GuD-Turbine besteht typischerweise im Wesentlichen aus einem Turbinengehäuse 10 und einem Rotor (nicht dargestellt) mit mehreren radialen, zur Turbinenquerschnittsfläche mehr oder weniger geneigten Turbinenschaufeln 20. Die äußere, gehäuseseitige Kante 30 der Turbinenschaufeln ist oftmals mit Dichtungslippen 40 und/oder Lüftungslöchern versehen und daher unregelmäßig strukturiert, d.h. das Profil der Schaufelkante 30 ist wie z.B. aus den Figuren 1a, 2a und 3a erkennbar geformt.

In den Figuren 1a, 2a und 3a ist die gehäuseseitige Kante 30 einer Turbinenschaufel 20 sowie ein Abschnitt eines Turbinengehäuses 10 gezeigt, in dem eine erfindungsgemäße Vorrichtung zur Überwachung eines Radialspaltes 50 zwischen der Schaufelkante 30 und dem Gehäuse 10 untergebracht ist. Die Vorrichtung besteht aus einer Sendeeinrichtung und einer Empfangseinrichtung, wobei Sende- und Empfangseinrichtung bevorzugt aber nicht notwendigerweise als integrierte Sende-Empfangseinheit 60 ausgebildet sind. Das Senden und das Empfangen kann auf getrennten Antennen oder über eine gemeinsame Antenne erfolgen. Die Sende-Empfangseinheit 60 ist in Achsrichtung der Turbine gesehen auf Höhe der Turbinenschaufeln 20 in einer radialen Aussparung 70 im Turbinengehäuse 10 untergebracht. Weiterhin umfasst die Vorrichtung eine Auswerteeinheit 90, die mit der Sende-Empfangseinheit 60 verbunden ist.

In der Figur 1a ist eine Vorrichtung zur Radialspaltmessung gemäß dem Stand der Technik dargestellt, deren Sende-Empfangseinheit 60 Mikrowellen aussendet. Die Schaufelkante 30 ist mit einer Dichtungslippe 40 oder einer anderen Überhöhung versehen. Die ausgesendeten Signale werden an der Schaufelkante 30 reflektiert und durch die Sende-Empfangseinheit 60 detektiert. In der Auswerteeinheit 90 wird über eine Phasen- oder eine Laufzeitauswertung der Abstand der Schaufelkante 30 von der Gehäusewand 100 ermittelt.

Figur 1b zeigt ein zugehöriges Messdiagramm, in dem mit Hilfe simulierter Daten der Abstand über dem Ort aufgetragen ist. Die Struktur der Schaufelkante 30, bspw. eine Dichtungslippe 40, kann mit dem integralen Verfahren nicht aufgelöst werden.

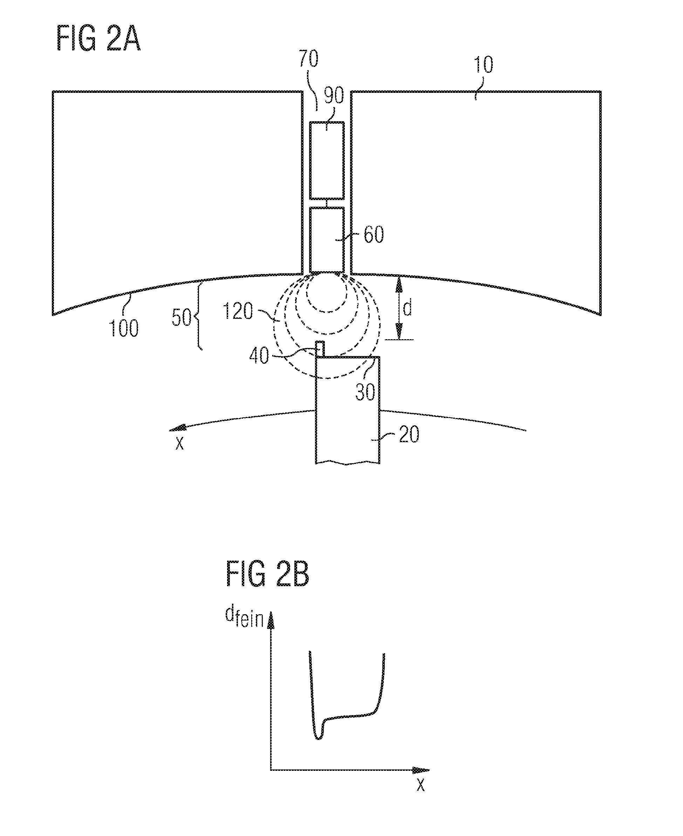

Die Figur 2a zeigt eine erfindungsgemäße Anordnung zur Radialspaltmessung, bei der durch eine nachträgliche, virtuelle Fokussierung mit Hilfe eines numerischen Verfahrens eine hohe laterale Auflösung in Bewegungsrichtung der Turbinenschaufel 20 erzielt wird. Im Unterschied zur Figur 1a sendet die Sende-Empfangseinheit 60 kontinuierlich Millimeterwellen aus, deren Zentralstrahl in etwa senkrecht zur Turbinenachse auf die Turbinenachse hin ausgerichtet ist. Die Verwendung von Millimeterwellen ermöglicht die örtliche Auflösung der Geometrie bzw. der Struktur der Schaufelkanten 30. Die Millimeterwellen breiten sich frei und mit möglichst geringem Richtfaktor bei bekannter Ausstrahlcharakteristik 120 aus.

Solange sich eine Schaufel 20 innerhalb der Strahlkeule 120 befindet, werden Abstandsmessungen durchgeführt. Hierfür wird, während sich die Schaufel 20 an der Sende-Empfangseinheit 60 vorbei bewegt, ein Reflexionsfaktor r = R · exp ( · ϕ) der an der Schaufelkante 30 reflektierten und in der Sende-Empfangseinheit 60 empfangenen Welle in Abhängigkeit von der Zeit gemessen. Der Reflexionsfaktor r ist generell darstellbar durch einen Betrag R und eine Phase ϕ, wobei die Phase ϕ = 2π · (2d) /λ der an der Schaufelkante 30 reflektierten Welle mit der Wellenlänge λ direkt vom Abstand d der reflektierenden Schaufelkante 30 zur Sende-Empfangseinheit 60 abhängt. Der Abstand d hängt seinerseits von der aktuellen Position x der Schaufelkante 30 ab. Da die Position x der Turbinenschaufel 20 in Abhängigkeit von der Zeit t bekannt ist, lässt sich zur Berechnung eines ortsabhängigen Reflexionsfaktors r(x) = R(x) · exp(i · ϕ(x)) die Zeitachse in eine Ortsachse umrechnen.

Der Reflexionsfaktor r(x) ist demnach nun zwar örtlich abgetastet, aber mit schlechter örtlicher Auflösung (r_{grob}(x)), da aufgrund der weitestgehend ungerichteten Ausstrahlcharakteristik 120 an einer Position x der Schaufel mehrere Ziele gleichzeitig gemessen werden bzw. da die Antenne die gesamte Schaufelkante 30 überstrahlt.

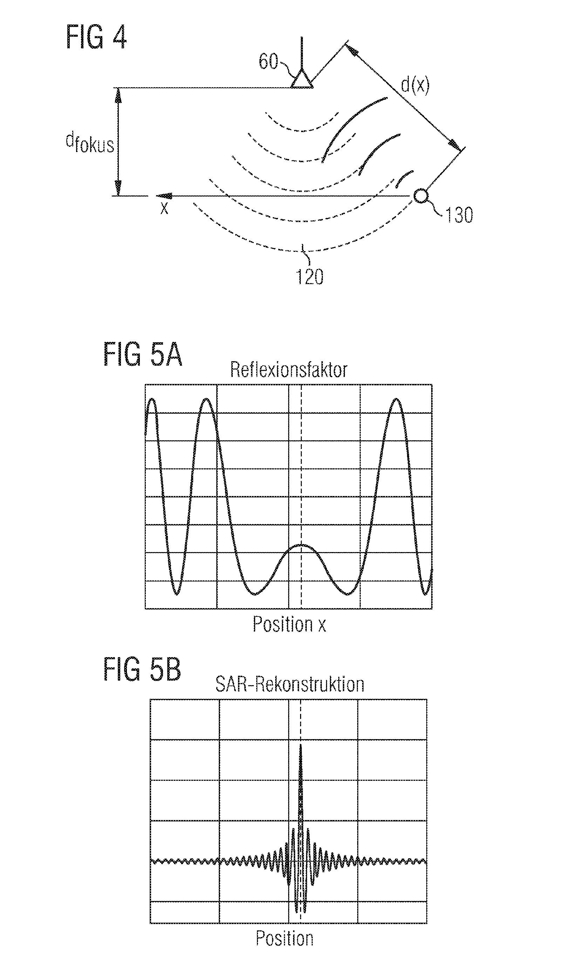

Im Rahmen der nachträglichen Fokussierung werden aus dieser ungerichteten Messung über numerische Verfahren höher ortsaufgelöste Daten r_{fein}(x) rekonstruiert, indem der gemessene ortsabhängige Reflexionsfaktor r_{grob}(x) mit einem Referenzsignal, insbesondere dem ortsabhängigen Reflexionsfaktor eines idealen Punktreflektors 130 (siehe Figur 4), entfaltet wird: Hierzu wird vorausgesetzt, dass der Betrag R und die Phase ϕ desjenigen Reflexionsfaktors r bekannt sind, den ein idealer Punktreflektor 130 in einem gegebenen Abstand d_{fokus} verursachen würde, wenn er sich auf der gleichen Bahn wie die Schaufelkante 30 an der Sende-Empfangseinheit 60 vorbei bewegt (Figur 4). Dies entspricht der Ausstrahlcharakteristik der Sende-Empfangseinheit 60 bzw. der E-Feldverteilung vor der Sende-Empfangseinheit 60.

Der gemessene Reflexionsfaktor r_{grob}(x) wird nun zur Berechnung eines höher aufgelösten Reflexionsfaktors r_{fein}(x) mit dem bekannten Reflexionsfaktor des Punktreflektors 130 mittels eines numerischen Verfahrens, bspw. mit Hilfe eines SAR-Verfahrens (Synthetic Aperture Radar) oder einer Entfaltung mit Tikhonov Regularisierung verglichen. Das SAR-Verfahren umfasst eine aus der Verwendung von Radaren mit synthetischer Apertur bekannte angepasste Filterung (matched filter) im Ortsfrequenzbereich. Bei der Tikhonov Regularisierung wird eine Entfaltung mit Hilfe eines Regularisierungsparameters durchgeführt. Die Anwendung anderer numerischer Verfahren wie eines Wiener Filters oder anderer iterativer Verfahren sind ebenfalls denkbar. Hierbei entsteht die örtliche Auflösung, die benötigt wird, um kleine Objekte wie die Dichtungslippen sichtbar zu machen.

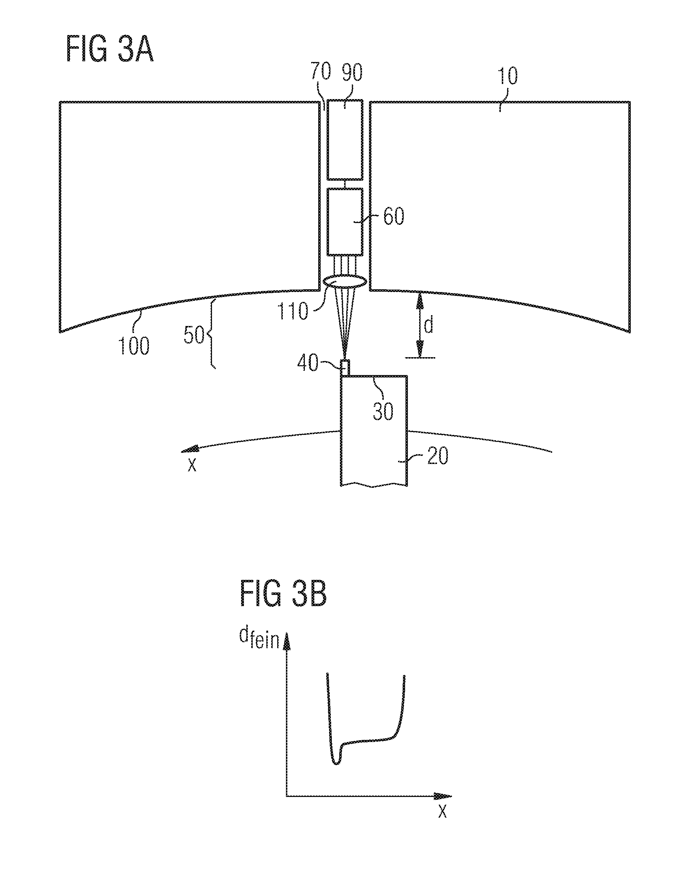

Aus dem nun bekannten höher aufgelösten Reflexionsfaktor r_{fein}(x) = R_{fein}(x) · exp(i · ϕ_{fein}(x)) lässt sich wiederum für alle x ein örtlich hochaufgelöster Phasenvektor ϕ_{fein}(x) ableiten. Aus dem Minimum Min(ϕ_{fein}(x)) der Phase von r_{fein}(x) lässt sich basierend auf dem Zusammenhang Min(ϕ_{fein}) = 2π · (2 · dₘₑₛ) / λ der minimale Abstand dₘₑₛₛ zwischen Schaufelkante 30 und Sende-Empfangseinheit 60 ableiten. Für den Fall, dass der gemessene Abstand dₘₑₛₛ von dem für die Rekonstruktion angenommenen Abstand d_{fokus} des Punktreflektors 130 abweicht, ist davon auszugehen, dass die Schaufelkante 30 nicht in der Fokusebene liegt und die Rekonstruktion nicht optimal ist. In einem solchen Fall wird die Rekonstruktion iterativ mit einem angepassten Reflexionsfaktor für den idealen Punktreflektor 130 mit d_{fokus} = dₘₑₛₛ wiederholt. Der gesuchte Abstand zwischen der Schaufelkante 30 und der inneren Gehäusewand 100 des Turbinengehäuses 10 ergibt sich aus dₘₑₛₛ, da bekannt ist, wie die Sende-Empfangseinheit 60 im Turbinengehäuse positioniert ist. Um die Diagramme in den Figuren 2b und 3b zu generieren, wird zunächst wie oben beschrieben der Phasenvektor ϕ_{fein}(x) aus dem hochaufgelösten Reflexionsfaktor r_{fein}(x) ermittelt. Über den bekannten Zusammenhang ϕ = 2π · (2d) / λ zwischen der Phase der empfangenen Welle und dem Abstand zwischen Schaufelkante und Sende-Empfangseinheit 60 wird schließlich aus dem Vektor ϕ_{fein}(x) der in den Diagrammen dargestellte Vektor d_{fein}(x) berechnet. Das Profil der Schaufelkante entspricht der Spiegelung der in den Diagrammen dargestellten Kurven d_{fein}(x) an der Horizontalen. Speziell das Diagramm in Figur 2b demonstriert für das SAR-Verfahren, dass die Dichtungslippe 40 klar aufgelöst werden kann.

Figur 3a zeigt eine weitere Anordnung zur Radialspaltmessung. Die Sende-Empfangseinheit 60 strahlt kontinuierlich Millimeterwellen aus, die durch eine keramische Linse 110 derart gebündelt werden, dass die Strahlenergie auf einen Punkt mit festem Abstand vor der Linse 110 fokussiert wird. Dieser Abstand entspricht dem Soll-Abstand zwischen Schaufelkante 30 und Gehäusewand 100 bzw. Linse 110. Gemessen wird in Analogie zum oben beschriebenen Verfahren der Reflexionsfaktor r(x). Durch die Linsen-Fokussierung ergibt sich im Unterschied zur nachträglichen Fokussierung direkt ein hochaufgelöster Reflexionsfaktor r_{fein}(x), wiederum darstellbar durch eine Phase ϕ_{fein}(x) und einen Betrag R_{fein}(x). Die weitere Berechnung des minimalen Abstands zwischen Schaufelkante 30 und Gehäusewand 100 sowie des Profils der Schaufelkante 30 erfolgt analog zu obigem Verfahren über die minimale Phase Min(ϕ_{fein}(x)) und den Vektor ϕ_{fein}(x). Das zugehörige Diagramm in Figur 3b zeigt, dass die Verwendung von Millimeterwellen in Kombination mit der Fokussierung eine derart hohe laterale Auflösung ermöglicht, dass die Struktur der Schaufelkante 30 reproduziert werden kann.

Da der Fokuspunkt im Allgemeinen nicht optimal klein ist, kann auch bei der Linsen-Fokussierung eine nachfolgende Rekonstruktion erfolgen. Hierzu muss in Analogie zur nachträglichen Fokussierung die Feldverteilung hinter der Linse bzw. das Verhalten eines Punktreflektors 130 bekannt sein.

In der Figur 5a wird zu Demonstrationszwecken der Realteil, d.h. die Inphase-Komponente I, eines simulierten Reflexionsfaktors r_{grob}(x) in Abhängigkeit von der Position x der Turbinenschaufel 20 dargestellt, während die Figur 5b das Ergebnis des Vergleichs des Reflexionsfaktors des Punktreflektors 130 mit dem gemessenen Reflexionsfaktor mit Hilfe des SAR-Verfahrens demonstriert.

## Patentansprüche

1. Verfahren zur Abstandsmessung zwischen einer inneren Gehäusewand (100) eines Turbinengehäuses (10) und einer radial äußeren Schaufelkante (30) einer bewegten Turbinenschaufel (20), bei dem durch eine im Bereich der Gehäusewand (100) des Turbinengehäuses (10) untergebrachte Sende-Empfangseinheit (60) kontinuierlich Millimeterwellen ausgesendet und die an der Schaufelkante (30) reflektierten Millimeterwellen durch die Sende-Empfangseinheit (60) empfangen werden, wobei durch eine Phasenauswertung der empfangenen Millimeterwellen ein Abstand (d) zwischen der Schaufelkante (30) und der Gehäusewand mess (100) bestimmt wird,
**dadurch gekennzeichnet, dass**
- durch nachträgliche Fokussierung mit Hilfe eines numerischen Verfahrens ein Profil der Schaufelkante (30) in Bewegungsrichtung der Turbinenschaufel (20) hochaufgelöst detektiert wird.

2. Verfahren nach Anspruch 1, **dadurch gekennzeichnet, dass** die nachträgliche Fokussierung die folgenden Schritte umfasst:
- Messung eines räumlich grob aufgelösten Reflexionsfaktors (r_{grob}(x)) anhand der empfangenen Millimeterwellen;
- Berechnung eines räumlich höher aufgelösten Reflexionsfaktors (r_{fein}(x)) durch einen Vergleich des gemessenen Reflexionsfaktors (r_{grob}(x)) mit einem bekannten Referenzsignal mit Hilfe des numerischen Verfahrens unter Verwendung der Phasen- und Betragsinformation des gemessenen Reflexionsfaktors (r_{grob}(x));
- Berechnung des Profils der Schaufelkante (30) aus der Phaseninformation (ϕ_{fein}(x)) des räumlich höher aufgelösten Reflexionsfaktors (r_{fein}(x)) mittels einer Phasenauswertung, wobei das Profil der Schaufelkante (30) dem Abstand zwischen der Schaufelkante (30) und der Gehäusewand (100) entspricht.

3. Verfahren nach Anspruch 2, **dadurch gekennzeichnet, dass** bei der Phasenauswertung zur Bestimmung des minimalen Abstands (dₘₑₛₛ) zwischen der Schaufelkante (30) und der Gehäusewand (100) der minimale Abstand (dₘₑₛₛ) über eine Phasenauswertung aus dem Minimum der Phaseninformation (ϕ_{fein}(x)) des räumlich höher aufgelösten Reflexionsfaktors (r_{fein}(x)) berechnet wird.

4. Verfahren nach einem der vorhergehenden Ansprüche, **dadurch gekennzeichnet, dass** das numerische Verfahren eine angepasste Filterung (matched filter), insbesondere ein SAR-Verfahren, oder eine Entfaltung mit Tikhonov Regularisierung ist.

5. Verfahren nach einem der Ansprüche 2 bis 4, **dadurch gekennzeichnet, dass** das Referenzsignal ein ortsabhängiger Reflexionsfaktor ist, den ein idealer Punktreflektor (130) in einem gegebenen Abstand verursachen würde, wenn er sich auf der gleichen Bahn wie die Schaufelkante (30) an der Sende-Empfangseinheit (60) vorbei bewegt.

6. Verfahren nach einem der vorhergehenden Ansprüche, **dadurch gekennzeichnet, dass** die Millimeterwellen mit bekannter Ausstrahlcharakteristik (120) ausgesendet werden.

7. Verfahren nach Anspruch 6, **dadurch gekennzeichnet, dass** das Aussenden der Millimeterwellen nur in dem Zeitraum durchgeführt wird, in dem sich die Turbinenschaufel (20) im Bereich der Ausstrahlcharakteristik (120) befindet.

8. Verfahren nach einem der vorhergehenden Ansprüche, **dadurch gekennzeichnet, dass** die Millimeterwellen ungerichtet ausgesendet werden.

## Claims

1. Method for measuring the distance between an inner housing wall (100) of a turbine housing (10) and a radially outer blade edge (30) of a moved turbine blade (20), in which millimetre waves are continuously emitted by a transceiver unit (60) accommodated in the region of the housing wall (100) of the turbine housing and the millimetre waves reflected at the blade edge (30) are received by the transceiver unit (60), wherein a distance (dₘₑₐₛ) between the blade edge (30) and the housing wall (100) is determined by a phase evaluation of the millimetre waves received,
**characterized in that**
a profile of the blade edge (30) in the direction of movement of the turbine blade (20) is detected in a highly resolved manner by subsequent focusing with the aid of a numerical method.

2. Method according to Claim 1, **characterized in that** the subsequent focusing comprises the following steps:
measuring a spatially coarsely resolved reflection factor (r_{coarse}(x)) on the basis of the millimetre waves received;
calculating a spatially more highly resolved reflection factor (r_{fine}(x)) by a comparison of the measured reflection factor (r_{coarse} (x)) with a known reference signal with the aid of the numerical method and by using the information concerning the phase and the amount of the measured reflection factor (r_{coarse}(x));
calculating the profile of the blade edge (30) from the phase information (ϕ_{fine}(x)) of the spatially more highly resolved reflection factor (r_{fine}(x)) by means of a phase evaluation, wherein the profile of the blade edge (30) corresponds to the distance between the blade edge (30) and the housing wall (100).

3. Method according to Claim 2, **characterized in that**, in the phase evaluation for determining the minimum distance (dₘₑₐₛ) between the blade edge (30) and the housing wall (100), the minimum distance (dₘₑₐₛ) is calculated by way of a phase evaluation from the minimum of the phase information (ϕ_{fine}(x)) of the spatially more highly resolved reflection factor (r_{fine}(x)).

4. Method according to one of the preceding claims, **characterized in that** the numerical method is a matched filtering, in particular an SAR method, or a deconvolution with Tikhonov regularization.

5. Method according to one of Claims 2 to 4, **characterized in that** the reference signal is a location-dependent reflection factor that an ideal point reflector (130) at a given distance would cause when it is moved past the transceiver unit (60) on the same path as the blade edge (30).

6. Method according to one of the preceding claims, **characterized in that** the millimetre waves are emitted with a known radiation characteristic (120).

7. Method according to Claim 6, **characterized in that** the emission of the millimetre waves is carried out only in the time period in which the turbine blade (20) is located in the region of the radiation characteristic (120).

8. Method according to one of the preceding claims, **characterized in that** the millimetre waves are emitted in an undirected manner.

## Revendications

1. Procédé de mesure de distance entre une paroi intérieure d'enceinte (100) d'une enceinte de turbine (10) et un bord d'aube radialement extérieur (30) d'une aube de turbine en mouvement (20), dans lequel des ondes millimétriques sont émises en continu par une unité d'émission-réception (60) installée dans la région de la paroi d'enceinte (100) de l'enceinte de turbine (10) et les ondes millimétriques réfléchies par le bord d'aube (30) sont reçues par l'unité d'émission-réception (60), dans lequel on détermine une distance (dₘₑₛₛ) entre le bord d'aube (30) et la paroi d'enceinte (100) par une analyse de phase des ondes millimétriques reçues, **caractérisé en ce que** l'on détecte avec une haute résolution un profil du bord d'aube (30) dans la direction de mouvement de l'aube de turbine (20) par une focalisation ultérieure à l'aide d'un procédé numérique.

2. Procédé selon la revendication 1, **caractérisé en ce que** la focalisation ultérieure comprend les étapes suivantes:
- mesure d'un facteur de réflexion à résolution spatiale grossière [r_{grob}(x)] à l'aide des ondes millimétriques reçues,
- calcul d'un facteur de réflexion à résolution spatiale plus élevée [r_{fein}(x)] par une comparaison du facteur de réflexion mesuré [r_{grob}(x)] avec un signal de référence connu à l'aide du procédé numérique avec utilisation de l'information de phase et de valeur du facteur de réflexion mesuré [r_{grob}(x)];
- calcul du profil du bord d'aube (30) à partir de l'information de phase [ϕ_{fein}(x)] du facteur de réflexion à résolution spatiale plus élevée [r_{fin}(x)] au moyen d'une analyse de phase, dans lequel le profil du bord d'aube (30) correspond à la distance entre le bord d'aube (30) et la paroi d'enceinte (100).

3. Procédé selon la revendication 2, **caractérisé en ce que**, lors de l'analyse de phase pour la détermination de la distance minimale (dₘₑₛₛ) entre le bord d'aube (30) et la paroi d'enceinte (100), on calcule la distance minimale (dₘₑₛₛ) par une analyse de phase à partir du minimum de l'information de phase [ϕ_{fein}(x)] du facteur de réflexion à résolution spatiale plus élevée [r_{fein}(X)].

4. Procédé selon l'une quelconque des revendications précédentes, **caractérisé en ce que** le procédé numérique est un filtrage adapté (matched filter), en particulier un procédé SAR, ou un déploiement avec une régularisation de Tikhonov.

5. Procédé selon l'une quelconque des revendications 2 à 4, **caractérisé en ce que** le signal de référence est un facteur de réflexion lié au site, qu'un réflecteur ponctuel idéal (130) provoquerait à une distance donnée, lorsqu'il se déplace devant l'unité d'émission-réception (60) sur la même trajectoire que le bord d'aube (30).

6. Procédé selon l'une quelconque des revendications précédentes, **caractérisé en ce que** les ondes millimétriques sont émises avec une caractéristique de rayonnement connue (120).

7. Procédé selon la revendication 6, **caractérisé en ce que** l'émission des ondes millimétriques n'est effectuée que dans la période de temps dans laquelle l'aube de turbine (20) se trouve dans la région de la caractéristique de rayonnement (120).

8. Procédé selon l'une quelconque des revendications précédentes, **caractérisé en ce que** les ondes millimétriques de façon omnidirectionnelle.
